# FASCICULE DE BREVET EUROPEEN

(11) **EP 2 239 858 B1**
(45) Date de publication et mention de la délivrance du brevet: **14.03.2012**
(21) Numéro de dépôt: 10159555.1
(22) Date de dépôt: 09.04.2010
(51) Int. Cl.: H04B 1/00, G01S 5/02

(54) **Récepteur multifréquences destiné à la localisation par satellites.**
Mehrbandempfänger für die Satellitennavigation
Multiband receiver for satellite navigation

(30) Priorité: 10.04.2009 FR 0901790
(43) Date de publication de la demande: 13.10.2010
(73) Titulaire: Thales, 92200 Neuilly Sur Seine (FR)
(72) Inventeur: LETESTU, Franck, 26300, BOURG-DE-PEAGE (FR); ROLLET, Stéphane, 26120, CHABEUIL (FR); DUMAS, Pierre-Yves, 07500, GUILHERAND-GRANGES (FR)
(74) Mandataire: Brunelli, Gérald

(56) Documents cités:
- US-A- 5 678 169
- US-A1- 2006 141 969
- US-A1- 2006 227 905
- US-A1- 2008 166 984
- PIZZARULLI A ET AL: "Reconfigurable and simultaneous dual band Galileo/GPS front-end receiver in 0.13Î 1/4 m RFCMOS" POSITION, LOCATION AND NAVIGATION SYMPOSIUM, 2008 IEEE/ION, IEEE, PISCATAWAY, NJ, USA, 5 mai 2008 (2008-05-05), pages 846-850, XP031340813 ISBN: 978-1-4244-1536-6

## Description

La présente invention concerne le domaine des systèmes de radionavigation par satellites et plus particulièrement les récepteurs multifréquences. L'invention concerne les récepteurs capables de recevoir des fréquences différentes provenant d'une même ou de différentes constellations de satellites de manière à corréler des informations pour déterminer sa propre position. L'invention traite de la partie radiofréquence d'un récepteur GNSS, dont l'acronyme signifie dans la terminologie anglo-saxonne "Global Navigation Satellite System", de l'optimisation de la chaine de réception et de la mutualisation des moyens de réception de fréquences différentes.

Les récepteurs GNSS actuels sont capables de traiter plusieurs bandes de fréquences. Certains récepteurs permettent une utilisation de signaux sur des bandes de fréquences différentes et possèdent de ce fait une précision accrue des mesures, ces dernières pouvant tenir compte du retard du signal dû à la traversée de l'ionosphère par exemple.
En outre l'utilisation de signaux sur plusieurs fréquences permet au récepteur GNSS de résister aux interférences survenant sur une fréquence en recevant le signal sur une autre fréquence.

Le traitement de deux bandes de fréquences nécessite aujourd'hui la réception de ces deux bandes ainsi que leur filtrage et leur passage en bande de base avant numérisation. Chaque bande est donc traitée en parallèle par une chaîne HF haute fréquence dédiée comprenant des filtres, des mélangeurs et des amplificateurs propres aux caractéristiques de la bande en réception présent dans la bande.
Cette duplication des ressources garantie la bonne réception de l'une des bandes si l'autre subit des interférences. En effet, l'utilisation de plusieurs fréquences peut permettre notamment une redondance des informations.
Dans le contexte du développement du système Galileo, de la mise en place du système russe Glonass et de l'apparition de fréquences supplémentaires sur le système GPS, l'utilisation de récepteurs multifréquences se généralise.

Différentes configurations peuvent nécessiter l'utilisation de récepteurs multifréquences. Par exemple, au sein d'une même constellation de satellites, qu'ils soient de type GPS sur les bandes L₁, L₂ et/ou L₅, ou bien qu'ils soient de type Galileo sur les bandes L₁, E₅ₐ, et/ou E_{5b}, l'utilisation de récepteurs bi-fréquences permet d'améliorer la précision de la localisation. Dans un autre exemple, il peut s'agir de récepteurs multifréquences capables de recevoir des signaux de constellations différentes. On appelle ces récepteurs, des "récepteurs multi-constellations", une première constellation utilisant par exemple les trois bandes L₁, L₂ et E₆, et une deuxième constellation utilisant par exemple les trois bandes L₁, L₅ et E_{5b}. Dans ce dernier cas, l'utilisation de plusieurs fréquences permet d'augmenter la précision, la disponibilité ainsi que la résistance aux interférences.

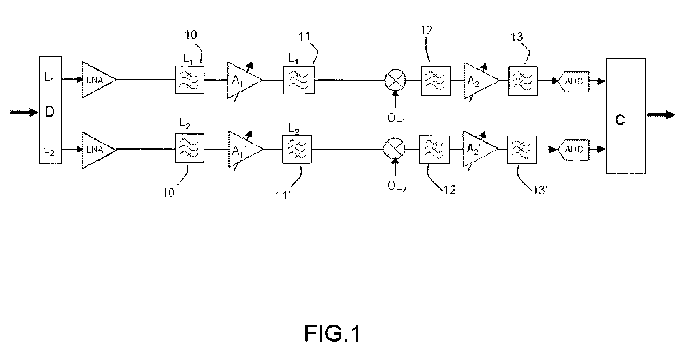

La figure 1 décrit une chaine de réception d'un récepteur GNSS bi-fréquences pouvant recevoir des informations deux fréquences GPS L₁/L₂ comprenant un diplexeur D permettant séparer les signaux provenant de deux bandes différentes. Les bandes sont notées L₁ et L₂ et correspondent respectivement à 1,5 GHz et 1,2 GHz dans l'exemple de la figure 1. Les signaux de chacune des fréquences L₁ et L₂ sont dirigées respectivement vers deux voies différentes. Chacune des voies comporte un amplificateur faible bruit, de type LNA, un filtre 10, 10' respectivement centré sur L₁ et sur L₂ selon les voies, un amplificateur réglable A₁, A₂ et un filtre sélectif 11, 11' centré respectivement sur L₁ et sur L₂. Enfin, chaque voie comporte un mélangeur et un oscillateur local adapté, noté OL₁ et respectivement OL₂ permettant le passage en une fréquence intermédiaire, respectivement dans chaque voie FI₁ et FI₂. Un filtre 12, 12' centré sur la fréquence FI₁, respectivement FI₂, permet de délivrer le signal filtré à un amplificateur réglable A₂, A₂' délivrant un signal amplifié à un filtre sélectif 13, respectivement 13'. Enfin en bout de chaque voie un convertisseur analogique numérique, noté ADC permet de délivrer un flux numérique de données à un corrélateur C. Le corrélateur C permet de poursuivre le signal numérique émis par le satellite et permet d'estimer indirectement une pseudo-distance entre un satellite et le récepteur.
Ce type de récepteur est généralisable à tout type de récepteurs bi-fréquences utilisant d'autres bandes de fréquences.

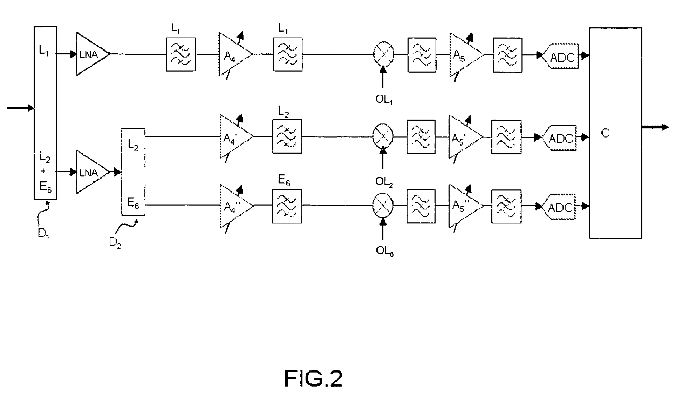

Un autre mode de réalisation d'un récepteur GNSS de l'art antérieur permet de traiter trois fréquences différentes. Dans l'exemple de la figure 2, un récepteur GNSS peut recevoir les trois bandes notées L₁, L₂ et E₆ correspondant à des bandes utilisées pour la localisation par satellites.
L'architecture du récepteur de la figure 2 comporte deux parties dont une partie est sensiblement identique à l'architecture de la figure 1 et l'autre partie est une voie de réception supplémentaire. Un triplexeur peut être utilisé ou réalisé par exemple en disposant deux diplexeurs en cascade D₁, D₂. L'architecture de la figure 2 s'appuie sur le fait que deux des trois bandes sont proches. Dans le cas d'exemple de la figure 2, les deux bandes proches sont les bandes E₆ et L₂. Dans le cas d'un récepteur multi fréquences Galileo ces deux bandes seraient remplacées par les bandes E₅ₐ et E_{5b}.
Dans ce cas de figure, le mode de réalisation permet de communaliser pour ces deux bandes l'amplificateur faible bruit, noté LNA dont l'acronyme anglo-saxon signifie "Low Noise Amplifier".
Cet exemple est notamment possible car la proximité des bandes L₂ et E₆, ou E₅ₐ et E_{5b} est suffisamment proche, pour utiliser en tête du récepteur un diplexeur D₁, au lieu d'un triplexeur.
Il est connu, par exemple, la demande de brevet américain US 2006/227905 A1 qui porte sur un récepteur comprenant un étage muni de moyens d'amplification, de moyens de filtrage des signaux reçus sur deux voies, et d'un commutateur pour délivrer le signal à un étage comprenant un mélangeur et un oscillateur local pour passer en fréquence intermédiaire. Le récepteur décrit comprend également un étage muni d'un amplificateur et d'un filtre.
Des inconvénients des récepteurs multifréquences actuels est la complexité des différentes chaines de réceptions, l'encombrement de ces chaines et la redondance de certains composants dans les différentes voies de réception.
L'invention permet de pallier les inconvénients précités.

Afin de ne pas multiplier les ressources HF en proportion du nombre de fréquences traitées, l'invention permet de communaliser certains éléments de la partie HF d'un récepteur multifréquences.
Ce type d'architecture est également très intéressant pour les récepteurs multi-antennes qui doivent multiplier ce nombre de voies par le nombre d'antennes utilisées.

L'invention permet de réduire la complexité et le coût tout en conservant des performances au niveau réception des signaux reçus.
L'invention permet de miniaturiser les récepteurs et faciliter l'intégration des fonctionnalités.

Avantageusement, le récepteur multifréquences comporte une première chaine de réception comprenant :
■ des moyens de réception d'au moins une première fréquence et une deuxième fréquence distinctes dont l'une au moins comprend un signal comportant des informations relatives à la position d'un satellite, lesdits moyens de réception comportant :
   ■ un premier étage d'amplification comportant au moins un amplificateur à faible bruit délivrant un premier signal filtré à partir du signal reçu par le récepteur ;
   ■ un second étage de traitement de chacune des fréquences reçues;
   ■ un troisième étage comprenant un mélangeur et au moins un oscillateur local permettant le passage d'une fréquence reçue en une première fréquence intermédiaire ;
   ■ un quatrième étage d'amplification et de filtrage comportant au moins un amplificateur réglable permettant d'amplifier le signal filtré en sortie du mélangeur et porté par la première fréquence intermédiaire et au moins un filtre permettant de filtrer la première fréquence intermédiaire.

Avantageusement, le second étage comporte :
■ un premier commutateur délivrant le signal provenant du premier étage alternativement dans deux voies selon chacune des fréquences reçues, chacune des voies comportant des moyens de filtrage de chacune des fréquences ;
■ des moyens d'amplification des signaux des deux voies ;
■ un second commutateur permettant de délivrer le signal vers le troisième étage.

Avantageusement, les moyens de filtrage du second étage comportent un premier ensemble de filtres permettant de filtrer les signaux provenant de l'amplificateur faible bruit du premier étage et un second ensemble de filtres permettant de filtrer les signaux amplifiés par les moyens d'amplification du second étage.

Avantageusement, les moyens d'amplification comprennent :
■ un commutateur permettant de commuter les signaux provenant du premier ensemble de filtres du second étage ;
■ un amplificateur réglable mutualisé amplifiant les signaux provenant de chacune des voies reliées audit commutateur ;
■ un commutateur permettant de commuter les signaux amplifiés par l'amplificateur réglable mutualisé et délivrant les signaux amplifiés au second ensemble de filtres du second étage.

Avantageusement, la première chaine de réception comporte un pré-étage de filtrage comportant un filtre passe-bandes permettant la réception d'au moins deux bandes de fréquences.

Avantageusement, la première chaine de réception du récepteur comporte un premier convertisseur analogique/ numérique permettant de numériser le signal amplifié et filtré de la première fréquence intermédiaire.

Avantageusement, le récepteur comporte un calculateur, noté corrélateur C, permettant de poursuivre le signal numérique émis par le satellite.

Avantageusement, la première fréquence est comprise dans la bande L₁ et la deuxième fréquence est comprise dans la bande L₂

Avantageusement, un diplexeur et une deuxième chaine de réception comportent des moyens de réception d'une troisième fréquence. Le diplexeur délivre un premier signal porté par la première et la deuxième fréquence dans la première chaine de réception et délivre un second signal porté par la troisième fréquence dans une deuxième chaine de réception, la dite deuxième chaîne de réception comportant :
■ un étage d'amplification comportant au moins un amplificateur à faible bruit délivrant un premier signal filtré à partir du second signal reçu par le récepteur ;
■ un étage de filtrage comportant un amplificateur réglage (A₈) et au moins un filtre ;
■ un mélangeur et au moins un oscillateur local permettant le passage d'une fréquence reçue en une deuxième fréquence intermédiaire ;
■ un étage d'amplification et de filtrage comportant au moins un amplificateur réglable permettant d'amplifier le signal filtré en sortie du mélangeur et porté par la deuxième fréquence intermédiaire et au moins un filtre permettant de filtrer la fréquence intermédiaire.

Avantageusement, la deuxième chaine de réception du récepteur comporte un second convertisseur analogique/ numérique permettant de numériser le signal amplifié et filtré de la deuxième fréquence intermédiaire.
Avantageusement, le récepteur comporte un calculateur, noté corrélateur, permettant de détecter des erreurs de transmission de l'une des deux chaines de réception.
Avantageusement, la première fréquence est comprise dans la bande E₅ₐ, et la deuxième fréquence est comprise dans la bande E_{5b} et la troisième fréquence dans la bande L₁.
Avantageusement, la première fréquence est comprise dans la bande L₂, et la deuxième fréquence est comprise dans la bande E₆ et la troisième fréquence est comprise dans la bande L₁.

D'autres caractéristiques et avantages de l'invention apparaîtront à l'aide de la description qui suit, faite en regard des dessins annexés qui représentent :
- la figure 1 : un récepteur bi-fréquences de l'art antérieur comportant deux voies de réception ;
- la figure 2 : un récepteur tri-fréquences de l'art antérieur comportant trois voies de réception ;
- la figure 3 : un exemple de réalisation d'un récepteur GNSS bi-fréquences selon l'invention ;
- la figure 4 : un exemple de réalisation d'un récepteur GNSS tri-fréquences selon l'invention ;
- la figure 5 : un exemple de réalisation d'un récepteur GNSS tri-fréquences selon l'invention utilisant des signaux de constellations différentes ;
- la figure 6 : un second mode de réalisation d'un récepteur bi-fréquence selon l'invention ;
- la figure 7 : un second mode de réalisation d'un récepteur tri-fréquence selon l'invention ;
- la figure 8 : un second mode de réalisation d'un récepteur tri-fréquence selon l'invention utilisant des signaux de constellations différentes.

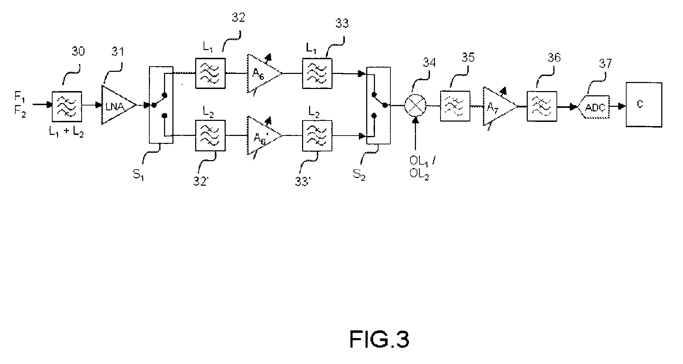

La figure 3 représente un premier mode de réalisation de l'invention.
Une chaine de réception comporte un filtre 30 passe-bande permettant de recevoir et traiter deux fréquences F₁ et F₂. Dans l'exemple de la figure 3, les deux fréquences F₁ et F₂ sont associées à deux bandes respectivement la bande L₁, correspondant à une bande autour de 1,5GHz, et la bande L₂, correspondant à une bande autour de 1,2GHz.
Un amplificateur faible bruit 31, qui peut être par exemple un LNA tel que représenté dans l'exemple de la figure 3 permet d'amplifier les signaux en sortie du filtre 30.
Un premier commutateur, également appelé dans la terminologie anglo-saxonne "Switch", permet de diriger les signaux amplifiés selon deux voies.
Une première voie comporte :
■ un filtre 32 permettant de transmettre les signaux de la bande L₁ dans la première voie ;
■ un amplificateur réglable A₆ permettant d'amplifier les signaux filtrés par le filtre 32 ;
■ un filtre sélectif 33 permettant de délivrer des signaux filtrés après amplification.
La deuxième voie comporte :
■ un filtre 32' permettant de transmettre les signaux de la bande L₂ dans la première voie ;
■ un amplificateur réglable A₆' permettant d'amplifier les signaux filtrés par le filtre 32 ;
■ un filtre sélectif 33' permettant de délivrer des signaux filtrés après amplification.

Enfin, dans la chaine de réception du récepteur GNSS, un second commutateur S₂ permet de faire converger alternativement les signaux de la première et la deuxième voie vers un mélangeur 34.
Le mélangeur 34 permet de mélanger respectivement les signaux des bandes L₁ et L₂ avec une fréquence d'horloge provenant respectivement d'un premier oscillateur local OL₁ et d'un second oscillateur local OL₂.
Un commutateur non représenté permet de passer d'une fréquence horloge du premier oscillateur local OL₁ à une fréquence horloge du second oscillateur local OL₂.
Dans un mode particulier de réalisation, l'invention permet de disposer d'une unique fréquence horloge comportant une période commune générant les fréquences intermédiaires souhaitées.

A la sortie du mélangeur, on obtient une fréquence intermédiaire FI₁ ou FI₂, selon si les signaux de la bande L₁ sont mélangés avec l'horloge locale OL₁ ou si les signaux de la bande L₂ sont mélangés avec l'horloge locale OL₂.
Un filtre 35 permet de filtrer les signaux autres que les fréquences intermédiaires FI₁ ou FI₂ vers un amplificateur réglable A₇, l'amplificateur réglable permet de délivrer un signal amplifié à un autre filtre sélectif 36.

L'utilisation d'amplificateur réglable ou variable permet de pallier aux problèmes de dérive et permet d'homogénéiser le niveau de sortie des signaux en bout de la chaine de réception.
En bout de chaine de réception un convertisseur analogique/ numérique, noté dans l'exemple ADC, permet de délivrer un flux de données numériques à un ou plusieurs corrélateurs C.

Le corrélateur C permet de poursuivre le signal numérique émis par le satellite et permet d'estimer indirectement une pseudo-distance entre un satellite et le récepteur.
Dans différents modes de réalisation le corrélateur peut être réalisé à partir d'un ASIC ou un FPGA par exemple.

L'invention permet avantageusement de regrouper des composants de la chaine de réception de manière à simplifier l'architecture, réduire l'encombrement et diminuer les coûts.
Dans l'exemple de la figure 3, en comparaison avec une chaine de réception classique de l'art antérieur, l'invention a permis de mutualiser un amplificateur faible bruit, un mélangeur et un ensemble de composants comprenant des filtres et des amplificateurs.

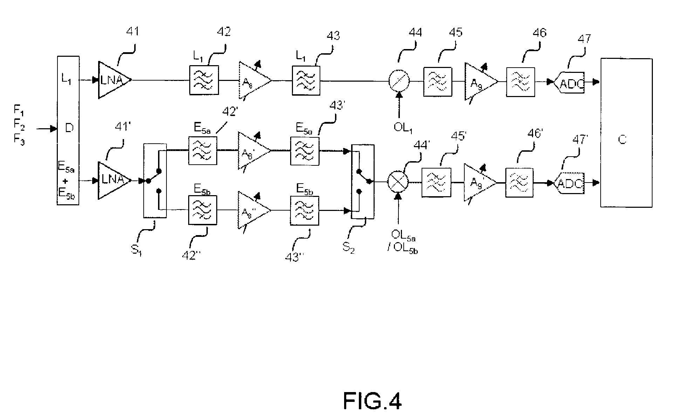

La figure 4 représente une variante de réalisation d'un récepteur GNSS multifréquences, comportant notamment des moyens de réception de trois fréquences distinctes comprises dans les bandes communément appelées L₁, E₅ₐ et E_{5b}.
Un diplexeur D permet de diriger les fréquences reçues selon leur bande de réception. Notamment dans ce mode de réalisation, les bandes E₅ₐ et E_{5b} étant suffisamment proches, les fréquences reçues appartenant à l'une de ces deux bandes sont dirigées vers un amplificateur faible bruit 41', de type LNA. Les signaux portés par les fréquences dans la bande L₁ sont acheminées au moyen du diplexeur vers un amplificateur faible bruit 41.
Les signaux sortant de l'amplificateur 41' sont dirigés vers une chaine de réception sensiblement proche de celle de la figure 3 aux caractéristiques près des composants qui sont adaptés aux fréquences de réception en ce qui concerne les étages de filtrage 42', 42", 43', 43", 45' et 46', des étages d'amplification A₈', A₈", A₉', le mélangeur 44' et le convertisseur analogique / numérique 47'.
Les signaux sortant de l'amplificateur 41 sont acheminés vers une voie de réception comportant :
■ un filtre 42 permettant de transmettre les signaux de la bande L₁ dans la première voie ;
■ un amplificateur réglable A₈ permettant d'amplifier les signaux filtrés par le filtre 42 ;
■ un filtre sélectif 43 centré sur la bande L₁ permettant de délivrer des signaux filtrés après amplification ;
■ un mélangeur 44 comportant un oscillateur local OL₁ permettant de délivrer, après mélange avec les signaux provenant du filtre 43, une fréquence intermédiaire ;
■ un amplificateur réglable A₉ ;
■ un filtre sélectif 46 et un convertisseur analogique / numérique 47.

En bout de chaine un corrélateur C permet de corréler les signaux issus des deux convertisseurs 47 et 47'.

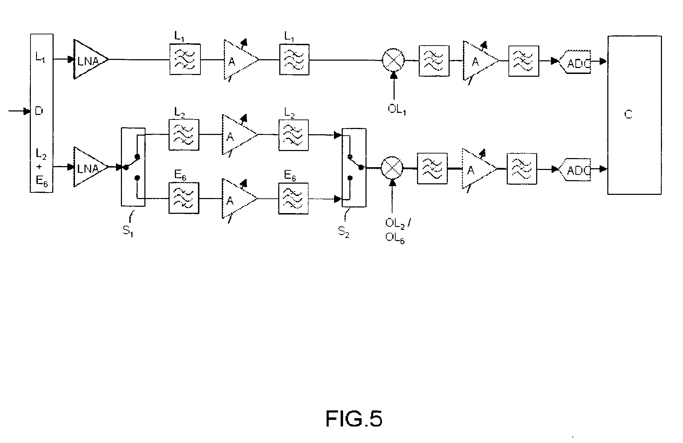

La figure 5 représente une variante de réalisation proche de la figure 4, dans laquelle le diplexeur sépare d'une part les signaux reçus dans la bande L₁ et d'autre part les signaux reçus dans les bandes L₂ et E₆.
Cette solution est adaptée à la réception de signaux provenant de deux constellations différentes, telle que celle délivrant le signal GPS et Galiléo.
L'architecture est sensiblement proche de celle de la figure 4 aux caractéristiques près des composants.
Un avantage de l'invention est l'utilisation de commutateurs et de la fréquence de commutation entre les différentes voies.
Notamment, un avantage réside dans le calcul des corrections ionosphériques qui sont réalisées à intervalles réguliers mais qui ne nécessitent pas la réception en continu d'un signal.

Les architectures selon l'invention des figures 4 et 5 comportent de nombreux avantages :
Un premier avantage est la précision accrue due au calcul des corrections ionosphériques quelque soit la constellation. Selon les modes de réalisation la commutation entre les fréquences L₂ et E₆ ou entre les fréquences E₅ₐ et E_{5b} ou entre les fréquences L₁ et L₂, à intervalles réguliers permet d'effectuer les calculs des corrections ionosphériques sur l'une des deux fréquences. En effet, la poursuite des deux fréquences en continu n'est pas nécessaire pour calculer les corrections ionosphériques.
Un second avantage est de permettre la conservation de la meilleure disponibilité possible en cas d'interférences sur une bande. L'invention permet un mode de commutation de manière à choisir la fréquence la moins affectée entre L₂ et E₆, respectivement selon les modes de réalisations entre E₅ₐ et E_{5b} ou entre L₁ et L₂.
Un troisième avantage de l'invention est de permettre l'utilisation de filtres de même bande passante sur L₂ et E₆, respectivement selon les modes de réalisations entre E₅ₐ et E_{5b} ou entre L₁ et L₂. Notamment l'utilisation de filtre ayant les mêmes bandes passantes permet de ne pas ajouter de contraintes sur l'échantillonneur du commutateur.

L'invention permet de conserver les performances de réjection et de linéarité des modes de réalisations décrit en comparaison avec les performances d'une architecture classique comportant autant de voies de réception que de fréquences reçues.
L'utilisation d'un diplexeur, telle que celui décrit dans les figures 4 ou 5, couvrant d'une part la bande L₁ et d'autre part les bandes L₂ et E₆, et respectivement dans un autre mode de réalisation les bandes E₅ₐ et E_{5b}, ne dégrade pas les performances en comparaison avec le mode de réalisation de la figure 3 où un diplexeur permet de couvrir les bandes L₁ et L₂, ou dans un autre mode de réalisation non décrit les bandes L₁ et L₅.
En effet, en terme de réjection, le premier amplificateur faible bruit possède une linéarité suffisante pour absorber les écarts de décibels perdus en réjection.
Les contraintes de linéarité reposent principalement sur les amplificateurs RF secondaires et sur l'étage de traitement de la fréquence intermédiaire FI. Pour ces composants, le commutateur et les filtres garantissent une isolation suffisante.
Enfin, en termes de risques de développement, la ségrégation physique des voies permet de minimiser l'influence de E₆ sur L₂ dans l'exemple de la figure 5 et de E₅ₐ sur E_{5b} dans l'exemple de la figure 4 et de L₁ sur L₂ dans l'exemple de la figure 3.

Un autre avantage réside en ce que les voies analogiques traitant les fréquences intermédiaires FI sont isolées les unes des autres, car une seule voie est active à un instant donné.

Une variante de réalisation de l'invention propose de mutualiser d'autres composants, tels que les amplificateurs réglables, de chacune des voies.

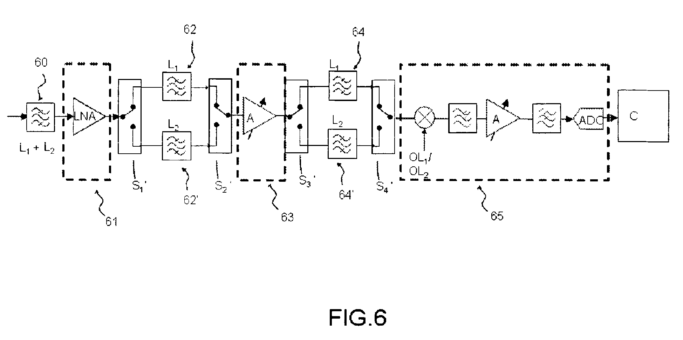

La figure 6 représente un cas de réalisation de l'invention sensiblement proche du cas de la figure 3. Le récepteur GNSS, dans l'exemple de la figure 6, peut recevoir les fréquences des bandes L₁ et L₂.
Un filtre passe-bandes 60 permet de centrer les signaux à traiter des bandes L₁ et L₂, un amplificateur faible bruit 61, de type LNA, amplifie les signaux avant de les diriger vers un commutateur S₁'. Le commutateur S₁' dirige les signaux reçus selon deux voies 62, 62', chacune des voies comportant un étage de filtrage. Un second commutateur S₂' permet de faire converger les signaux filtrés vers un amplificateur réglable A. Ce dernier amplificateur est mutualisé et permet d'amplifier les signaux provenant de chacune des voies.
Enfin un troisième commutateur S₃' permet de séparer chacun des signaux à transmettre dans deux voies séparées 64 et 64'. Chacune des voies 64 et 64' comporte un étage de filtrage. Les signaux filtrés sont alors transmis à un quatrième commutateur S₄' qui permet de transmettre les signaux de chacune des voies 64 et 64' vers un mélangeur.
Le dernier étage 65 de la chaine de réception du récepteur GNSS est identique à celui de la figure 3.

Un avantage de ce mode de réalisation est qu'elle permet d'utiliser des ASIC RF contenant des composants tels que des amplificateurs, des oscillateurs locaux (OL) et des filtres FI tout en utilisant des filtres RF externes.

Ainsi seuls les filtres RF sont doublés dans ce mode de réalisation, le reste de la chaîne étant mutualisé.

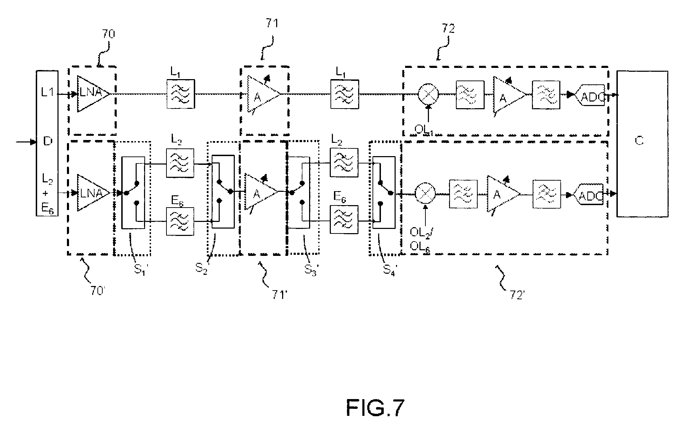

La figure 7 représente un mode de réalisation semblable à celui de la figure 4. Le récepteur GNSS tri-fréquence permet de recevoir, dans cet exemple des fréquences contenues dans les bandes L₁, E₅ₐ et E_{5b}.
Un diplexeur D permet de séparer d'une part les signaux compris dans la bande L₁ et d'autres part les signaux compris dans les bandes E₅ₐ et E_{5b}.
Une première voie acheminant les signaux compris dans la bande L₁ dans la chaine de réception comporte des étages 70, 71 permettant d'amplifier les signaux filtrés et un étage 72 permettant de traiter la fréquence intermédiaire propre à la voie L₁.
Une deuxième voie acheminant les signaux compris dans les bandes E₅ₐ et E_{5b} est sensiblement proche de la chaine de réception de la figure 6. Elle comporte deux étages d'amplifications permettant de communaliser les moyens d'amplifications des signaux reçus de chacune des voies traitant les signaux E₅ₐ et traitant les signaux E_{5b} .
Enfin, un dernier étage 72' permet de traiter les fréquences intermédiaires de la chaine de réception.
Un commutateur non représenté sur la figure permet d'alterner la transmission des oscillateurs locaux OL₅ₐ et OL_{5b} dans le mélangeur.
Deux ASIC RF seulement deviennent nécessaires au lieu de trois dans le cas d'un récepteur tri-fréquences, un seul ASIC dans le cas bi-fréquences.

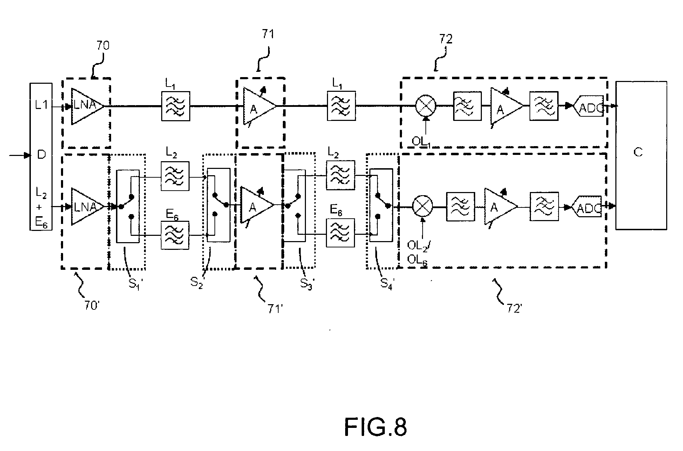

Enfin, une autre variante de réalisation est représentée figure 8 et traite du cas spécifique de la réception de signaux provenant de différentes constellations, de type GPS ou Galiléo par exemple (L1/L2 GPS et E6 Galiléo).
Dans ce dernier cas l'architecture est semblable à celle de la figure 7 excepté les composants adaptés aux bandes de fréquences propres à ce mode de réalisation.
Un duplexeur permet de séparer d'une part les signaux compris dans la bande L₁ et d'autre part les signaux compris dans les bandes L₂ et E₆.

Un dernier mode de réalisation de l'invention, non représentée, permet d'intégrer aussi les commutateurs dans le composant ASIC afin de n'avoir plus que les filtres RF comme composants extérieurs.

Ces architectures permettent donc la réception simultanée de N-1 fréquences parmi N fréquences avec, aux filtres RF près, les composants nécessaires à la réception de seulement N-1 fréquences.
On peut étendre l'architecture de l'invention à un grand nombre de fréquences en réception.

Un des principaux avantages de l'invention réside dans la diversité des différentes solutions que permet l'utilisation des commutateurs, notamment en ce qui concerne leur fréquence d'échantillonnage.
Le choix notamment des instants et de la fréquence de transition entre les fréquences commutées permet de nombreuses utilisations d'un récepteur GNSS selon l'invention.
La commutation de l'ensemble des commutateurs, par exemple des commutateurs S₁ et S₂ des figures 3, 4 et 5 ou des commutateurs S₁', S₂', S₃', S₄' des figures 6, 7 et 8 d'une chaine de réception est synchronisée de manière à conserver l'intégrité des signaux reçus dans chaque voie de réception.
Un premier mode de réalisation permet une commutation "à la demande" des commutateurs.
Dans le cas d'une architecture d'un récepteur tri-fréquences, comportant par exemple des voies de réception de fréquences comprises dans les bandes L₁, E₆ et L₂, un mode standard d'utilisation est une réception sur les bandes L₁ et L₂. Une commutation sur la bande E₆ peut être opérée lorsque des interférences surviennent sur la bande L₂. Dans ce mode de réalisation, l'invention garantie une résistance aux interférences en basculant sur une fréquence toujours disponible.
Le basculement ou la commutation peut être, selon les modes de réalisation de l'invention, réalisée par une action manuelle d'un opérateur ou automatiquement détectée par un calculateur selon la dégradation des signaux reçus dans la bande L₂.

Dans le cas d'une architecture d'un récepteur tri-fréquences, comportant par exemple des voies de réception de fréquences comprises dans les bandes L1, E₅ₐ et E_{5b} utilisée pour des applications aéronautiques civiles, la commutation peut s'effectuer lors des changements de phases de vol.
Par exemple les bandes L1 et E₅ₐ dans la phase de vol de croisière de manière à profiter de la plus grande largeur de la bande E₅ₐ, puis, lors de la phase d'approche où les informations d'intégrité présentes sur E5b sont capitales, commuter sur les bandes L1 et E_{5b}.

Un autre mode de réalisation de l'invention permet une commutation régulière des commutateurs à basse fréquence.

Un mode comprenant des commutations régulières peut être envisagé dans certains cas de figures. Il permet de bénéficier alternativement d'une fréquence puis de l'autre. Ainsi une fréquence de commutation d'une deuxième par exemple, permet de garantir la poursuite des deux fréquences commutées et de bénéficier alternativement des corrections ionosphériques sur l'une puis sur l'autre fréquence.

Un autre mode de réalisation de l'invention permet une commutation régulière des commutateurs à fréquence élevée.

Une fréquence de commutation plus rapide de l'ordre de 100µs par exemple permet de garantir la poursuite en parallèle des deux fréquences commutées. Ce temps de commutation reste suffisamment faible pour permettre la démodulation des bits de données sur chaque voie. Dans la plupart des applications la durée de transmission d'un bit de données est sensiblement proche de quelques millideuxièmes.
L'inconvénient de la commutation est la perte de 3 dB en rapport signal à bruit sur chaque voie du fait que le signal n'est disponible que la moitié du temps. Ce fonctionnement nécessite aussi une parfaite synchronisation de la partie traitement du signal avec les instants de commutation de la chaine HF, ainsi que des algorithmes de traitements adaptés.

Ce type d'architecture à commutation de fréquences peut être envisagé dans des domaines aussi divers que la réception de signaux de radiocommunication, le radar ou le traitement multi-antennes avec un grand nombre de voies HF.

Un avantage des architectures selon l'invention est que leur mode de fonctionnement offre une réduction de coût et d'encombrement de la chaine de réception HF d'un récepteur GNSS multifréquences tout en conservant des performances optimales.
L'invention permet de conserver les qualités d'un système N-fréquences d'un point de vue d'un usage GNSS tout en ayant une architecture HF adaptée à la réception de seulement N-1 fréquences.

## Revendications

1. Récepteur multifréquences comportant une première chaine de réception comprenant :
■ des moyens de réception d'au moins une première fréquence (F1) et une deuxième fréquence (F2) distinctes dont l'une au moins comprend un signal comportant des informations relatives à la position d'un satellite, lesdits moyens de réception comportant :
■ un premier étage d'amplification comportant au moins un amplificateur à faible bruit (31) délivrant un premier signal filtré à partir du signal reçu par le récepteur ;
■ un second étage de traitement de chacune des fréquences reçues (F₁, F₂) ;
■ un troisième étage comprenant un mélangeur (34) et au moins un oscillateur local permettant le passage d'une fréquence reçue en une première fréquence intermédiaire ;
■ un quatrième étage d'amplification et de filtrage comportant au moins un amplificateur réglable (A₇) permettant d'amplifier le signal filtré en sortie du mélangeur et porté par la première fréquence intermédiaire et au moins un filtre (36) permettant de filtrer la première fréquence intermédiaire,
**caractérisé en que** le second étage comporte :
■ un premier commutateur (S₁) délivrant le signal provenant du premier étage alternativement dans deux voies selon chacune des fréquences reçues, chacune des voies comportant des moyens de filtrage (32, 32', 33, 33') de chacune des fréquences ;
■ des moyens d'amplification (A₆, A₆') des signaux des deux voies ;
■ un second commutateur (S₂) permettant de délivrer le signal vers le troisième étage.

2. Récepteur multifréquences selon la revendication 1, **caractérisé en ce que** les moyens de filtrage du second étage comportent un premier ensemble de filtres permettant de filtrer les signaux provenant de l'amplificateur faible bruit du premier étage et un second ensemble de filtres permettant de filtrer les signaux amplifiés par les moyens d'amplification du second étage.

3. Récepteur multifréquences selon la revendication 2, **caractérisé en ce que** les moyens d'amplification comprennent :
■ un commutateur (S₂') permettant de commuter les signaux provenant du premier ensemble de filtres du second étage ;
■ un amplificateur réglable mutualisé amplifiant les signaux provenant de chacune des voies reliées audit commutateur ;
■ un commutateur (S₃') permettant de commuter les signaux amplifiés par l'amplificateur réglable mutualisé et délivrant les signaux amplifiés au second ensemble de filtres du second étage.

4. Récepteur multifréquences selon la revendication 1, **caractérisé en ce que** la première chaine de réception comporte un pré-étage de filtrage comportant un filtre passe-bandes (30) permettant la réception d'au moins deux bandes de fréquences.

5. Récepteur multifréquences selon l'une des revendications 1 à 2, **caractérisé en ce que** la première chaine de réception du récepteur comporte un premier convertisseur analogique/ numérique (37) permettant de numériser le signal amplifié et filtré de la première fréquence intermédiaire.

6. Récepteur multifréquences selon la revendication 3, **caractérisé en ce que** le récepteur comporte un calculateur, noté corrélateur (C), permettant de poursuivre le signal numérique émis par le satellite.

7. Récepteur multifréquences selon la revendication 4, **caractérisé en ce que** la première fréquence (F₁) est comprise dans une bande L₁ et la deuxième fréquence (F₂) dans une bande L₂.

8. Récepteur multifréquences selon l'une des revendications 1 à 6, comportant un diplexeur et une deuxième chaine de réception comportant des moyens de réception d'une troisième fréquence (F₃), **caractérisé en que** le diplexeur délivre un premier signal porté par la première fréquence (F₁) et la deuxième fréquence (F₂) dans la première chaine de réception et délivre un second signal porté par la troisième fréquence F₃ dans une deuxième chaine de réception, la dite deuxième chaîne de réception comportant :
■ un étage d'amplification comportant au moins un amplificateur à faible bruit (41) délivrant un premier signal filtré à partir du second signal reçu par le récepteur ;
■ un étage de filtrage comportant un amplificateur réglage (A₈) et au moins un filtre (42, 43) ;
■ un mélangeur (44) et au moins un oscillateur local permettant le passage d'une fréquence reçue en une deuxième fréquence intermédiaire ;
■ un étage d'amplification et de filtrage comportant au moins un amplificateur réglable (A₉) permettant d'amplifier le signal filtré en sortie du mélangeur (34) et porté par la deuxième fréquence intermédiaire et au moins un filtre (46) permettant de filtrer la fréquence intermédiaire.

9. Récepteur multifréquences selon la revendication 8, **caractérisé en ce que** la deuxième chaine de réception du récepteur comporte un second convertisseur analogique/ numérique permettant de numériser le signal amplifié et filtré de la deuxième fréquence intermédiaire.

10. Récepteur multifréquences selon la revendication 8, **caractérisé en ce que** le récepteur comporte un calculateur, noté corrélateur (C), permettant de détecter des erreurs de transmission de l'une des deux chaines de réception.

11. Récepteur multifréquences selon la revendication 8, **caractérisé en ce que** la première fréquence (F₁) est comprise dans une bande E₅ₐ, la deuxième fréquence (F₂) est comprise dans une bande E_{5b} et la troisième fréquence (F₃) est comprise dans la bande L₁.

12. Récepteur multifréquences selon la revendication 8, **caractérisé en ce que** la première fréquence (F₁) est comprise dans une bande L₂, la deuxième fréquence (F₂) est comprise dans la bande E₆ et la troisième fréquence (F₃) est comprise dans la bande L₁.

## Claims

1. A multi-frequency receiver comprising a first reception chain, comprising:
- means for receiving at least one distinct first frequency (F₁) and one distinct second frequency (F₂), at least one of which comprises a signal comprising information relative to the position of a satellite, said receiving means comprising:
- a first amplifying stage comprising at least one low noise amplifier (31) delivering a first signal filtered from the signal received by the receiver;
- a second stage of processing each of the received frequencies (F₁, F₂);
- a third stage comprising a mixer (34) and at least one local oscillator allowing the transmission of a received frequency to a first intermediate frequency;
- a fourth amplifying and filtering stage comprising at least one adjustable amplifier (A₇) allowing the signal filtered at the output of the mixer and carried by the first intermediate frequency to be amplified, and at least one filter (36) allowing the first intermediate frequency to be filtered,
**characterised in that** the second stage comprises:
- a first switch (S₁) delivering the signal originating from the first stage alternatively in two channels according to each of the received frequencies, each of the channels comprising means for filtering (32, 32', 33, 33') each frequency;
- means for amplifying (A₆, A₆') the signals of the two channels;
- a second switch (S₂) allowing the signal to be delivered to the third stage.

2. The multi-frequency receiver according to claim 1, **characterised in that** the
filtering means of the second stage comprise a first set of filters allowing the signals to be filtered that originate from the low noise amplifier of the first stage and a second set of filters allowing filtering of the signals amplified by the amplifying means of the second stage.

3. The multi-frequency receiver according to claim 2, **characterised in that** the amplifying means comprise:
- a switch (S₂') allowing switching of the signals originating from the first set of filters of the second stage;
- a mutualised adjustable amplifier amplifying the signals originating from each of the channels connected to said switch;
- a switch (S₃') allowing switching of the signals amplified by the mutualised adjustable amplifier and delivering the amplified signals to the second set of filters of the second stage.

4. The multi-frequency receiver according to claim 1, **characterised in that** the first receiving chain comprises a filtering pre-stage comprising a band pass filter (30) allowing reception of at least two frequency bands.

5. The multi-frequency receiver according to any one of claims 1 to 2, **characterised in that** the first receiving chain of the receiver comprises a first analogue/digital converter (37) allowing digitisation of the amplified and filtered signal of the first intermediate frequency.

6. The multi-frequency receiver according to claim 3, **characterised in that** the receiver comprises a computer, designated as a correlator (C), that allows the digital signal emitted by the satellite to be tracked.

7. The multi-frequency receiver according to claim 4, **characterised in that** the first frequency (F₁) is included in a band L₁ and the second frequency (F₂) is included in a band L₂.

8. The multi-frequency receiver according to any one of claims 1 to 6, comprising a diplexer and a second receiving chain comprising means for receiving a third frequency (F₃), **characterised in that** the diplexer delivers a first signal carried by the first frequency (F₁) and the second frequency (F₂) in the first receiving chain and delivers a second signal carried by the third frequency F₃ in a second receiving chain, said second receiving chain comprising:
- a first amplifying stage comprising at least one low noise amplifier (41) delivering a first signal filtered from the signal received by the receiver;
- a filtering stage comprising an adjustable amplifier (A₈) and at least one filter (42, 43);
- a mixer (44) and at least one local oscillator allowing the transmission from a received frequency to a second intermediate frequency;
- an amplifying and filtering stage comprising at least one adjustable filter (A₉) allowing the signal filtered at the output of the mixer (34) and carried by the second intermediate frequency to be amplified, and at least one filter (46) allowing the intermediate frequency to be filtered.

9. The multi-frequency receiver according to claim 8, **characterised in that** the second receiving chain of the receiver comprises a second analogue/digital converter allowing digitisation of the amplified and filtered signal of the second intermediate frequency.

10. The multi-frequency receiver according to claim 8, **characterised in that** the receiver comprises a computer, designated as a correlator (C), allowing detection of the transmission errors of one of the two receiving chains.

11. The multi-frequency receiver according to claim 8, **characterised in that** the first frequency (F₁) is included in a band E₅ₐ, the second frequency (F₂) is included in a band E_{5b} and the third frequency (F3) is included in the band L₁.

12. The multi-frequency receiver according to claim 8, **characterised in that** the first frequency (F₁) is included in a band L₂, the second frequency (F₂) is included in the band E₆ and the third frequency (F₃) is included in the band L₁.

## Patentansprüche

1. Multifrequenzempfänger, der eine erste Empfangskette umfasst, der Folgendes umfasst:
- Mittel zum Empfangen von wenigstens einer separaten ersten Frequenz (F₁) und einer separaten zweiten Frequenz (F₂), von denen wenigstens eine ein Signal umfasst, das Informationen über die Position eines Satelliten beinhaltet, wobei die Empfangsmittel Folgendes umfassen:
- eine erste Verstärkungsstufe, die wenigstens einen Low-Noise-Verstärker (31) umfasst, der ein erstes Signal liefert, das von dem vom Empfänger empfangenen Signal gefiltert wird;
- eine zweite Stufe zum Verarbeiten jeder der empfangenen Frequenzen (F₁, F₂);
- eine dritte Stufe, die einen Mischer (34) und wenigstens einen Lokaloszillator umfasst, der eine empfangene Frequenz in eine erste Zwischenfrequenz durchlässt;
- eine vierte Verstärkungs- und Filterstufe, die wenigstens einen justierbaren Verstärker (A₇), der es zulässt, das am Ausgang des Mischers gefilterte und durch die erste Zwischenfrequenz geführte Signal zu verstärken, sowie wenigstens ein Filter (36) umfasst, das das Filtern der ersten Zwischenfrequenz zulässt,
**dadurch gekennzeichnet, dass** die zweite Stufe Folgendes umfasst:
- einen ersten Schalter (S₁) zum Zuführen des Signals, das von der ersten Stufe kommt, alternativ in zwei Kanälen gemäß jeder der empfangenen Frequenzen, wobei jeder der Kanäle Mittel zum Filtern (32, 32', 33, 33') jeder der Frequenzen umfasst;
- Mittel zum Verstärken (A₆, A₆') der Signale der beiden Kanäle;
- einen zweiten Schalter (S₂), der das Zuführen des Signals zu der dritten Stufe zulässt.

2. Multifrequenzempfänger nach Anspruch 1, **dadurch gekennzeichnet, dass** die Filtermittel der zweiten Stufe einen ersten Satz von Filtern umfassen, die ein Filtern der Signale zulassen, die von dem Low-Noise-Verstärker der ersten Stufe kommen, und einen zweiten Satz von Filtern, die das Filtern der Signale zulässt, die von den Verstärkungsmitteln der zweiten Stufe verstärkt werden.

3. Multifrequenzempfänger nach Anspruch 2, **dadurch gekennzeichnet, dass** die Verstärkungsmittel Folgendes umfassen:
- einen Schalter (S₂'), der das Schalten der vom ersten Satz von Filtern der zweiten Stufe kommenden Signale zulässt;
- einen mutualisierten justierbaren Verstärker, der die von jedem der mit dem Schalter verbundenen Kanäle stammenden Signale verstärkt;
- einen Schalter (S₃'), der das Schalten der durch den mutualisierten justierbaren Verstärker verstärkten Signale zulässt und die verstärkten Signale zu dem zweiten Satz von Filtern der zweiten Stufe liefert.

4. Multifrequenzempfänger nach Anspruch 1, **dadurch gekennzeichnet, dass** die erste Empfangskette eine Filtervorstufe umfasst, die ein Bandpassfilter (30) umfasst, das den Empfang von wenigstens zwei Frequenzbändern zulässt.

5. Multifrequenzempfänger nach einem der Ansprüche 1 bis 2, **dadurch gekennzeichnet, dass** die erste Empfangskette des Empfängers einen ersten Analog/Digital-Wandler (37) umfasst, der die Digitalisierung des verstärkten und gefilterten Signals der ersten Zwischenfrequenz zulässt.

6. Multifrequenzempfänger nach Anspruch 3, **dadurch gekennzeichnet, dass** der Empfänger einen Rechner, Korrelator (C) genannt, umfasst, der das Verfolgen des von dem Satelliten emittierten digitalen Signals zulässt.

7. Multifrequenzempfänger nach Anspruch 4, **dadurch gekennzeichnet, dass** die erste Frequenz (F₁) in einem Band L₁ enthalten ist und die zweite Frequenz (F₂) in einem Band L₂ enthalten ist.

8. Multifrequenzempfänger nach einem der Ansprüche 1 bis 6, der einen Diplexer und eine zweite Empfangskette umfasst, die Mittel zum Empfangen einer dritten Frequenz (F₃) umfasst, **dadurch gekennzeichnet, dass** der Diplexer ein von der ersten Frequenz (F₁) und der zweiten Frequenz (F₂) in der ersten Empfangskette geführtes Signal zuführt und ein von der dritten Frequenz F₃ in einer zweiten Empfangskette geführtes zweites Signal zuführt, wobei die zweite Empfangskette Folgendes umfasst:
- eine erste Verstärkungsstufe, die wenigstens einen Low-Noise-Verstärker (41) umfasst, der ein erstes Signal zuführt, das von dem vom Empfänger empfangenen Signal gefiltert wurde;
- eine Filterstufe, die einen justierbaren Verstärker (A₈) und wenigstens ein Filter (42, 43) umfasst;
- einen Mischer (44) und wenigstens einen Lokaloszillator, der eine empfangene Frequenz in eine zweite Zwischenfrequenz durchlässt;
- eine Verstärkungs- und Filterstufe, die wenigstens ein justierbares Filter (A₉), das die Verstärkung des am Ausgang des Mischers (34) gefilterten und durch die zweite Zwischenfrequenz geführten Signals zulässt, und wenigstens ein Filter (46) umfasst, das die Filterung der Zwischenfrequenz zulässt.

9. Multifrequenzempfänger nach Anspruch 8, **dadurch gekennzeichnet, dass** die zweite Empfangskette des Empfängers einen zweiten Analog/Digital-Wandler umfasst, der die Digitalisierung des verstärkten und gefilterten Signals der zweiten Zwischenfrequenz zulässt.

10. Multifrequenzempfänger nach Anspruch 8, **dadurch gekennzeichnet, dass** der Empfänger einen Rechner, Korrelator (C) genannt, umfasst, der die Erkennung von Übertragungsfehlern von einer der beiden Empfangsketten zulässt.

11. Multifrequenzempfänger nach Anspruch 8, **dadurch gekennzeichnet, dass** die erste Frequenz (F₁) in einem Band E₅ₐ enthalten ist, die zweite Frequenz (F₂) in einem Band E_{5b} enthalten ist und die dritte Frequenz (F₃) in dem Band L₁ enthalten ist.

12. Multifrequenzempfänger nach Anspruch 8, **dadurch gekennzeichnet, dass** die erste Frequenz (F₁) in einem Band L₂ enthalten ist, die zweite Frequenz (F₂) im Band E₆ enthalten ist und die dritte Frequenz (F₃) in dem Band L₁ enthalten ist.
